# EUROPÄISCHE PATENTSCHRIFT

(11) **EP 1 699 970 B1**
(45) Veröffentlichungstag und Bekanntmachung des Hinweises auf die Patenterteilung: **23.04.2008**
(21) Anmeldenummer: 04816352.1
(22) Anmeldetag: 23.12.2004
(51) Int. Cl.: D06F 58/04, F16C 37/00

(54) **WÄSCHETROCKNER**
CLOTHES DRYER
SECHE-LINGE

(30) Priorität: 23.12.2003 DE 10360898
(43) Veröffentlichungstag der Anmeldung: 13.09.2006
(73) Patentinhaber: BSH Bosch und Siemens Hausgeräte GmbH, 81739 München (DE)
(72) Erfinder: HEYDER, Reinhard, 13403 Berlin (DE); NAWROT, Thomas, Berlin (DE); ZIEMANN, Andreas, 14469 Potsdam (DE)
(86) Internationale Anmeldenummer: PCT/EP2004/053689
(87) Internationale Veröffentlichungsnummer: WO 2005/064069

(56) Entgegenhaltungen:
- DE-A1- 3 012 933
- GB-A- 766 712
- GB-A- 1 510 049
- US-A- 2 486 058
- US-A- 3 419 969

## Beschreibung

Die vorliegende Erfindung betrifft einen Wäschetrockner mit einer drehbaren Trommel zur Aufnahme von Wäsche und einem Lager zum drehbaren Lagern der Trommel.

Es sind Wäschetrockner bekannt, bei denen eine Trommel zur Aufnahme von Wäsche horizontal angeordnet ist und über Drehlager drehbar gelagert sind (siehe z.B. GB 766712A). Die Drehlager sind insbesondere dann, wenn sie benachbart zu heißer Prozessluft führenden Kanälen angeordnet sind, starken thermischen Belastungen ausgesetzt, die die Zuverlässigkeit und die Lebensdauer der Lager negativ beeinflussen.

Aufgabe der vorliegenden Erfindung ist es, einen Wäschetrockner mit einer mittels einem Lager drehbar gelagerten Trommel zur Verfügung zu stellen, der zuverlässig funktioniert.

Diese Aufgabe wird durch die Merkmale des Patentanspruches 1 gelöst. Vorteilhafte Ausgestaltungen und Weiterbildungen der Erfindung ergeben sich aus den Unteransprüchen.

Ein Wäschetrockner hat ein Gehäuse, in dem über ein Lager eine Trommel zur Aufnahme von Wäsche drehbar gelagert ist. Damit das Lager dauerhaft zuverlässig funktioniert, wird eine Kühleinrichtung zum Kühlen des Lagers vorgesehen. Hierdurch ist es möglich die maximale Wärmeausdehnung der Bauteile des Lagers der Trommel zu verringern und damit die mechanische Belastung zu verringern. Weiterhin wird durch die Kühlung des Lagers das für das Lager vorgesehene Schmiermittel weniger beansprucht, wenn das Lager bei niedrigeren Temperaturen betrieben wird. Weiterhin wird die Gefahr verringert, dass bei niedrigen Temperaturen das im Lager befindliche Schmiermittel dünnflüssig wird und austritt. Hierdurch wird die Lebensdauer und die Zuverlässigkeit des Lagers und damit des Wäschetrockners erhöht.

In einer vorteilhaften Ausbildung umfassen die Kühleinrichtung Mittel zur Verbesserung der Abstrahlung und/oder der Konvektion von Wärme vom Lager oder benachbart vom Lager. Insbesondere können Kühlflächen vorgesehen sein, die mit dem Lager thermisch leitend verbunden sind. Derartige Kühlflächen können durch eine entsprechend großflächige Gestaltung der Lagerkonsole oder durch das Vorsehen von Kühlrippen bewerkstelligt werden.

In einer vorteilhaften Ausführung hat die Kühleinrichtung eine Einrichtung zum Zuführen von kühlender Luft bevorzugt von Umgebungsluft zum Lager. Hierdurch wird eine aktive Kühlung zur Verfügung gestellt, mit der definierte thermische Verhältnisse am Lager bewerkstelligbar sind.

In einer vorteilhaften Ausführung ist ein Gebläse zum Fördern von Prozessluft durch die Trommel und/oder zum Fördern von Kühlluft für einen Kondensator vorgesehen, wobei das Gebläse als Einrichtung zum Führen von kühlender Luft zum Lager dient. Hierdurch ist es möglich, bereits im Trockner vorhandene Gebläse, entweder ein Gebläse zum Fördern von Prozessluft oder ein Gebläse zum Fördern von Kühlluft zu einem Kondensator als eine Kühleinrichtung zum Kühlen des Lagers mit zu verwenden.

In einer vorteilhaften Ausführung ist eine Prozessluftleitung vorgesehen, wobei ein Abschnitt der Prozessluftleitung und/oder die Trommel durch die Förderwirkung des Gebläses mit Unterdruck beaufschlagt ist und einen Unterdruckraum bilden. Weiterhin ist eine Kühlluftleitung zwischen dem Unterdruckraum und dem Lager vorgesehen, so dass Luft in Form von Umgebungsluft benachbart zum Lager angesaugt und über die Kühlluftleitung als Fehlluft der Prozessluft zugeführt wird.

Gemäß der Erfindung hat das Lager eine Lagerkonsole, die am Gehäuse befestigt ist und ein Prozessluftkanal hat eine Luftverteilungshaübe benachbart zum Lager, die Prozesslufteintrittslöcher in die Trommel abdeckt, wobei zwischen Luftverteilungshaube und der Lagerkonsole eine Kühlluftleitung in Form eines ringförmigen Spalts ausgebildet wird. Somit kann ein kühlender Luftstrom in Form von Umgebungsluft über den ringförmigen Spalt in den Prozessluftkanal überströmen. Durch den ringförmigen Spalt wird das Lager allseitig mit Kühlluft umspült und somit gut gekühlt.

In einer vorteilhaften Ausführung ist eine Prozessluftleitung vorgesehen, wobei ein Abschnitt der Prozessluftleitung und/oder die Trommel durch die Förderwirkung des Gebläses mit überdruck beaufschlagt ist und einen Überdruckraum bilden. Weiterhin ist eine Kühlluftleitung zwischen dem Überdruckraum und dem Lager vorgesehen, so dass ein Teil der geförderten Luft dem Lager zugeführt wird, um das Lager zu kühlen.

In einer vorteilhaften Ausführung ist die Prozessluftleitung als ein Kreislauf mit einem Kondensator vorgesehen, der über einen Kühlluftstrom gekühlt wird. Ein Teil des Kühlluftstroms wird abgezweigt und über eine Kühlluftleitung dem Lager zugeführt, um das Lager zu kühlen.

In einer vorteilhaften Ausführung wird die Kühlluftleitung derart dimensioniert, dass die Menge der Kühlluft bestimmt ist.

Weitere Einzelheiten, Merkmale und Vorteile der Erfindung ergeben sich aus der nachstehenden Beschreibung eines bevorzugten Ausführungsbeispiels eines erfindungsgemäßen Wäschetrockners unter Bezugnahme auf die Zeichnungen.

Darin zeigen:

Figur 1 eine Schnittansicht eines Wäschetrockners mit einem Lager für die Trommel gemäß einem ersten Ausführungsbeispiel;

Figur 2 eine Detailansicht des Lagers gemäß dem Wäschetrockner nach Figur 1;

Figur 3 eine Schnittansicht eines Wäschetrockners mit einem Lager für die Trommel gemäß einem zweiten Ausführungsbeispiel;

Figur 4 eine Detailansicht des Lagers gemäß dem Wäschetrockner nach Figur 3.

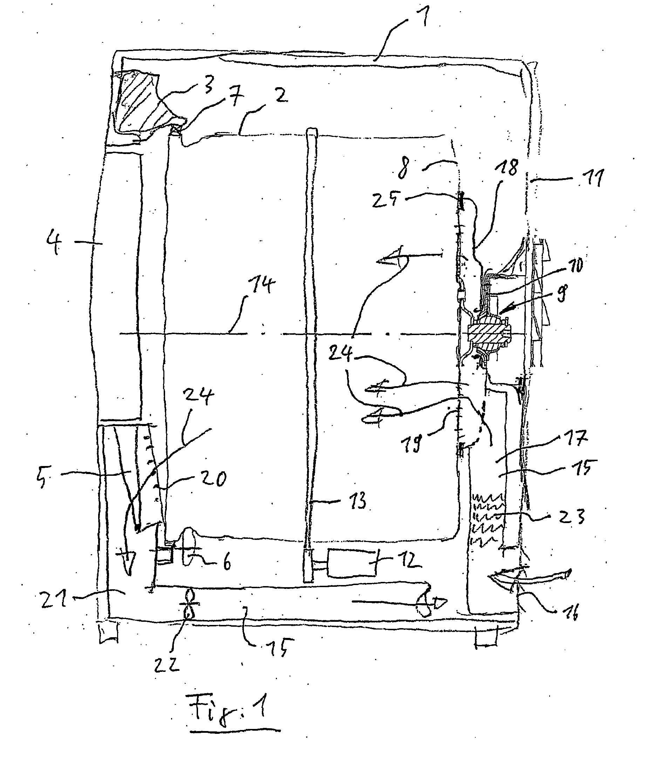

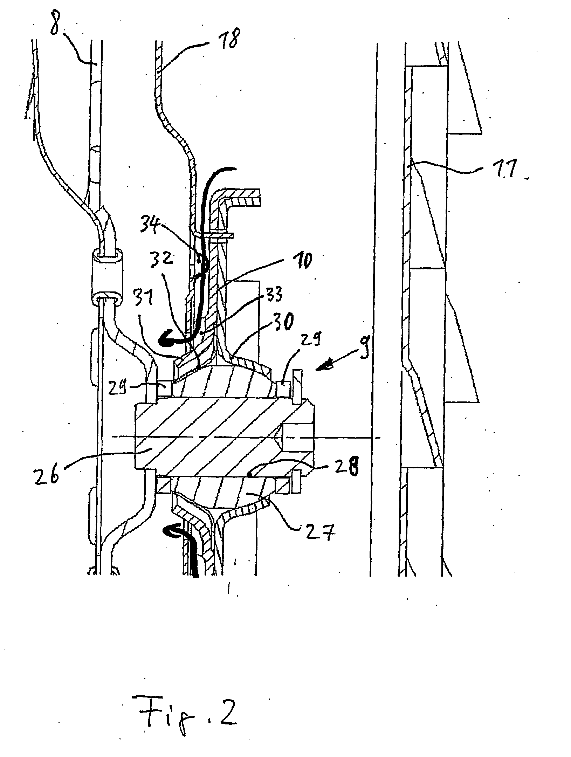

Gemäß Figur 1 und Figur 2 ist ein erstes Ausführungsbeispiel eines Wäschetrockners in Form eines Abluftwäschetrockners dargestellt. Der Wäschetrockner hat ein Gehäuse 1, eine im Gehäuse 1 gelagerte Trommel 2, ein vorderes Lagerschild 3, eine im vorderen Lagerschild 3 angeordnete Beschickungstür 4 und eine im unteren Abschnitt des vorderen Lagerschilds 3 untergebrachtes Flusensieb 5. Die Trommel 2 ist im vorderen Abschnitt über am vorderen Lagerschild 3 angeordnete Rollen 6 und im hinteren Abschnitt über ein zentrales, an der Rückwand 8 der Trommel 2 angeordnetes Lager 9 gelagert, das wiederum über eine Konsole 10 an der Rückwand 11 des Gehäuses 1 befestigt ist. Die Trommel 2 wird durch einen Motor 12 und einem Riemen 13 um die horizontale Achse 14 gedreht. Der Wäschetrockner hat eine Prozessluftleitung 15, die im vorliegenden Ausführungsbeispiel eine Einströmöffnung 16, einen Einströmkanal 17, eine sich daran anschließende Luftverteilungshaube 18, die an der Rückwand 8 der Trommel 2 angeordnete Prozesslufteintrittslöcher 19 abdeckt, ein Prozessluftauslassgitter 20, das Flusensieb 5 und einen Ausströmkanal 21, mit einem Gebläse 22 umfasst. Im Einströmkanal 17 ist weiterhin eine Heizung 23 angeordnet. Die Prozessluft strömt in Pfeilrichtung 24 von der Umgebung in die Eintrittsöffnung 16 über den Einströmkanal 17, die Heizung 23, die Luftverteilungshaube 18, die Trommel 2, das Prozessluftauslassgitter 20, das Flusensieb 5, den Ausströmkanal 21 und das Gebläse 22 wieder in die Umgebung. Die Luftverteilungshaube 18 ist gegenüber der Rückwand 8 der Trommel 2 über eine hintere Dichtung 25 abgedichtet. Stromauf des Gebläses 22 wird insbesondere in der Trommel 2 und der Luftverteilungshaube 18 ein Unterdruckraum ausgebildet.

Gemäß Figur 2 ist das Lager 9 näher dargestellt. Das Lager 9 hat einen Bolzen 26 der an der Rückwand 8 der Trommel 2 befestigt ist, und ein kugelförmiges Lagermaterial 27, das bevorzugt aus ölgetränktem Sintermaterial hergestellt ist. Das Lagermaterial 27 hat eine Bohrung 28 in der sich der Bolzen 26 drehen kann. Weiterhin hat das Lager 9 zwei Dichtungen 29. Die Konsole 10 hat eine äußere Halbschale 30 und eine innere Halbschale 31 zwischen denen das kugelförmige Lagermaterial 27 gehalten wird. Zwischen der äußeren Halbschale 30 und der inneren Halbschale 31 ist ein kegelförmiges Federelement 32 angeordnet, das das Lagermaterial 27 gegen Mitdrehen hemmt. Das kugelförmige Lagermaterial 27 kann Schwenkbewegungen quer zur horizontalen Achse 14 ausführen, um einen Winkelversatz der Trommel 2 auszugleichen. Auf der Innenseite der Konsole 10 ist parallel zur Konsole 10 der mittige Abschnitt der Luftverteilungshaube 18 unter Ausbildung eines ringförmigen Spalts 33 befestigt. Der ringförmige Spalt 33 wird gebildet durch Abstandsnocken 34, die an der Luftverteilungshaube 18 ausgebildet sind.

Die äußerte Halbschale 30 und die innere Halbschale 31 sind jeweils aus einem Blech hergestellt, das in der Lage ist, Wärme vom Lager abzutransportieren und durch Wärmestrahlung und Konvektion Wärme abzugeben. Da sich jedoch zwischen der Rückwand 8 der Trommel und der Luftverteilungshaube 18 heiße Prozessluft befindet, wird das Lager 9 stark aufgeheizt. Durch das Vorsehen des ringförmigen Spalts 33 zwischen der Konsole 10 und der Luftverteilungshaube 18 wird eine Kühlluftleitung zwischen dem Unterdruckraum und dem Lager 9 ausgebildet, wobei kühle Umgebungsluft über den ringförmigen Spalt 33 am Lager 9 vorbeistreichend als sogenannte Fehlluft in die Prozessluft hineingesaugt wird. Als Fördereinrichtung dient damit insbesondere das Gebläse 22, das für den Aufbau des Unterdrucks in der Trommel 2 zuständig ist. Durch die Ausbildung des relativ langen, parallel verlaufenden ringförmigen Spalts 33 wird eine große Oberfläche zur Wärmeübertragung des heißen Lagers an die durch den ringförmigen Spalt 33 strömende kühlende Umgebungsluft zur Verfügung gestellt. Hierdurch wird eine sehr einfache Einrichtung zum Kühlen des Lagers 9 unter Nutzung der sonstigen Einrichtungen, wie Gebläse 22 des Wäschetrockners zur Verfügung gestellt.

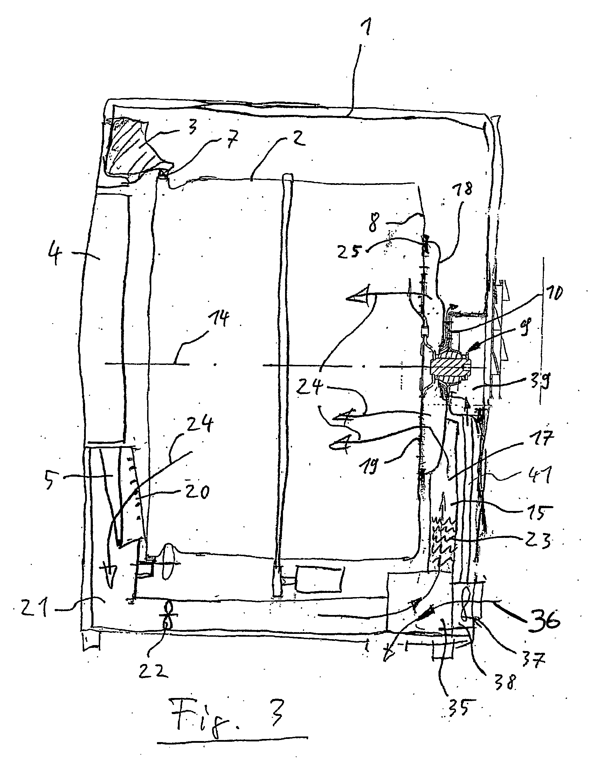

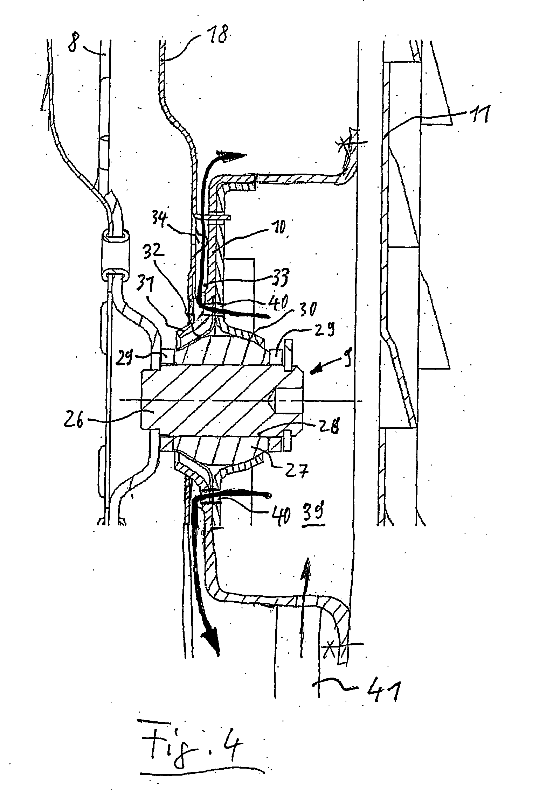

Gemäß Figur 3 und 4 ist ein zweites Ausführungsbeispiel des Wäschetrockners in Form eines Kondensationstrockners dargestellt. Nachstehend werden lediglich die Unterschiede in Bezug auf den als Ablufttrockner ausgebildeten Wäschetrockner nach Figur 1 und 2 dargelegt. Die Prozessluftleitung 15 ist als ein geschlossener Kreislauf ausgebildet, in den zusätzlich ein Kondensator 35 geschaltet ist, der üblicherweise als Querstrom- oder Gegenstromkondensator ausgebildet ist und durch einen Kondensatorkühlluftstrom 36 gekühlt wird. Der Kondensatorkühlluftstrom 36 wird durch ein zusätzliches Gebläse 37, das auf der gleichen Antriebswelle, wie das Gebläse 22 sitzen kann, in einer Kondensatorkühlluftleitung 38 erzeugt. Vom druckseitigen Abschnitt der Kondensatorkühlluftleitmg 38 wird eine Kühlluftleitung 41 abgezweigt, die in einen Raum 39 zwischen Rückwand 11 des Gehäuses 1 und der Konsole 10 mündet. Wie in Figur 4 näher dargelegt ist, strömt der Kühlluftstrom in den Raum 39, durch in der Konsole ausgebildeten Öffnungen 40 in den ringförmigen Spalt 33 zwischen der Konsole 10 und der Luftverteilungshaube 18. Hierdurch wird ebenso eine positive Zwangskühlung des Lagers 9 erzielt.

Bei einer Abwandlung sowohl für das Ausführungsbeispiel gemäß Figur 1 und 2 als auch für das Ausführungsbeispiel gemäß Figur 3 und 4. Abwandlung wird ein die Richtung des Kühlluftstroms gemäß Figur 4 umgekehrt, und Kühlluft über die Kühlluftleitung 41 aus dem Raum 39, der über den ringförmigen Spalt 33 nachströmt, abgesaugt. Hierbei kann die Absaugung an der Kühlluftleitung 41 entweder über die Saugseite der Kondensatorkühlluftleitung 38 (Figur 3) erfolgen oder über die Saugseite der Prozessluftleitung 15 stromauf der Heizung 23 gemäß Figur 1 erfolgen.

Alternativ zu der in Figur 1 dargestellten Ausführung kann das Gebläse 22 stromauf der Trommel 2 angeordnet sein, so dass in der Prozessluftleitung vor der Trommel 2 und auch in der Trommel 2 ein Überdruck herrscht. Ein Teil dieser Luft stromauf der Trommel 2 und auch stromauf der Heizung 23 kann über eine Abzweigungsleitung dem Lager 9 zugeführt werden, um das Lager 9 zu kühlen.

## Patentansprüche

1. Wäschetrockner mit einem Gehäuse (1), einer drehbaren Trommel (2) zur Aufnahme von Wäsche, einem Lager (9) zum drehbaren Lagern der Trommel (2) Gehäuse (1), welches Lager eine am Gehäuse (1) befestigten Konsole (10) hat, einer Kühleinrichtung zum Kühlen des Lagers (9) und einer Prozessluftleitung umfassend eine dem Lager (9) benachbarte Luftverteilungshaube (18), welche Prozesslufteintrittslöcher (19) in der Trommel (2) abdeckt, **dadurch gekennzeichnet, dass** eine Kühlluftleitung zwischen der Konsole (10) und der Luftverteilungshaube (18) in Form eines ringförmigen Spalts (33) ausgebildet ist, wobei die Konsole (10) und die Luftverteilungshaube (18) den Spalt (33) ausbilden.

2. Wäschetrockner nach Anspruch 1, bei dem der ringförmige Spalt (33) um das Lager (9) herum angeordnet ist.

3. Wäschetrockner nach einem der vorigen Ansprüche, bei dem die Kühleinrichtung Mittel zur Verbesserung der Abstrahlung oder Konvektion von Wärme vom Lager (9) und/oder benachbart vom Lager (9) umfassen und/oder Kühlflächen vorgesehen sind, die mit dem Lager (9) thermisch leitend verbunden sind.

4. Wäschetrockner nach einem der vorigen Ansprüche, bei dem die Kühleinrichtung eine Einrichtung zum Zuführen von kühlender Luft, bevorzugt Umgebungsluft, zum Lager (9) hat

5. Wäschetrockner nach Anspruch 4, bei dem ein Gebläse (22, 37) zum Fördern von Prozessluft durch die Trommel (2) und/oder zum Fördern von Kühlluft für einen Kondensator (35) vorgesehen ist, wobei das Gebläse (22, 37) als Einrichtung zum Zuführen von kühlender Luft zum Lager (9) dient.

6. Wäschetrockner nach Anspruch 5, bei dem eine Prozessluftleitung (15) vorgesehen ist, wobei ein Abschnitt der Prozessluftleitung (15) und/oder die Trommel (2) durch eine Förderwirkung des Gebläses (22, 37) mit Unterdruck beaufschlagt ist und einen Unterdruckraum bildet, und wobei eine Kühlluftleitung zwischen dem Unterdruckraum und dem Lager (9) vorgesehen ist, durch welche Luft in Form von Umgebungsluft benachbart zum Lager (9) ansaugbar und als Fehlluft der Prozessluft zuführbar ist.

7. Wäschetrockner nach Anspruch 5, bei dem eine Prozessluftleitung (15) vorgesehen ist, wobei ein Abschnitt der Prozessluftleitung (15) und/oder die Trommel (2) durch eine Förderwirkung des Gebläses (22, 37) mit Überdruck beaufschlagt ist und einen Überdruckraum bildet, und wobei eine Kühlluftleitung zwischen dem Überdruckraum und dem Lager (9) vorgesehen ist, durch welche ein Teil der von dem Gebläse (22, 37) geförderten Luft dem Lager (9) zuführbar ist, um das Lager (9) zu kühlen.

8. Wäschetrockner nach einem der vorigen Ansprüche, **dadurch gekennzeichnet, dass** eine Prozessluftleitung (15) als ein Kreislauf mit einem Kondensator (35) vorgesehen ist, der über einen Kühlluftstrom (36) gekühlt wird, und dass ein Teil des Kühlluftstroms (36) abgezweigt und über eine Kühlluftleitung (41) dem Lager (9) zugeführt wird, um das Lager (9) zu kühlen.

9. Wäschetrockner nach einem der vorigen Ansprüche, bei dem die Menge der Kühlluft für das Lager (9) durch die Dimension der Kühlluftleitung (41) bestimmt ist.

## Claims

1. Laundry drier with a housing (1), a rotatable drum (2) for reception of laundry, and a bearing (9) for rotatable mounting of the drum (2) in the housing (1), which bearing has a bracket (10) fastened to the housing (1), a cooling device for cooling the bearing (9) and a process air duct comprising an air distribution hood (18), which is adjacent to the bearing (9) and which covers process air inlet holes (19) in the drum (2), **characterised in that** a cooling air duct is formed between the bracket (10) and the air distribution hood (18) in the form of an annular gap (33), wherein the bracket (10) and the air distribution hood (18) form the gap (33).

2. Laundry drier according to claim 1, in which the annular gap (33) is arranged around the bearing (9).

3. Laundry drier according to one of the preceding claims, in which the cooling device comprises means for improving the radiation or convection of heat from the bearing (9) and/or adjacent to the bearing (9) and/or cooling surfaces are provided which are thermally conductively connected with the bearing (9).

4. Laundry drier according to one of the preceding claims, in which the cooling device has a device for feeding cooling air, preferably ambient air, to the bearing (9).

5. Laundry drier according to claim 4, in which a fan (22, 37) for conveying process air through the drum (2) and/or for conveying cooling air for a condenser (35) is provided, wherein the fan (22, 37) serves as device for feeding cooling air to the bearing (9).

6. Laundry drier according to claim 5, in which a process air duct (15) is provided, wherein a section of the process air duct (15) and/or the drum (2) is acted on with underpressure by a conveying effect of the fan (22, 37) and forms an underpressure space and wherein a cooling air duct is provided between the underpressure space and the bearing (9), through which duct air in the form of ambient air can be inducted adjacent to the bearing (9) and fed as shortage air to the process air.

7. Laundry drier according to claim 5, in which a process air duct (15) is provided, wherein a section of the process air duct (15) and/or the drum (2) is acted on with excess pressure by a conveying effect of the fan (22, 37) and forms an excess pressure space and wherein a cooling air duct is provided between the excess air space and the bearing (9), through which duct a part of the air, which is conveyed by the fan (22, 37), is feedable to the bearing (9) in order to cool the bearing (9).

8. Laundry drier according to one of the preceding claims, **characterised in that** a process air duct (15) is provided as a circuit with a condenser (35), which is cooled by way of a cooling air flow (36), and a part of the cooling air flow (36) is branched off and fed by way of a cooling air duct (41) to the bearing (9) in order to cool the bearing (9).

9. Laundry drier according to one of the preceding claims, in which the amount of cooling air for the bearing (9) is determined by the size of the cooling air duct (41).

## Revendications

1. Sèche-linge avec un corps (1), un tambour rotatif (2) pour loger du linge, un coussinet (9) pour l'appui rotatif du tambour (2) dans le corps (1), lequel coussinet a une console (10) fixée au corps (1), un dispositif de refroidissement pour refroidir le coussinet (9) et une conduite d'air du processus comprenant un capot de diffusion de l'air (18), contigu au coussinet (9), qui recouvre des trous d'entée d'air du processus (19) situés dans le tambour (2), **caractérisé en ce qu'**une conduite d'air de refroidissement est conçue entre la console (10) et le capot de diffusion de l'air (18) sous forme d'un intervalle annulaire (33), la console (10) et le capot de diffusion de l'air (18) constituant l'intervalle (33).

2. Sèche-linge selon la revendication 1, dans lequel l'intervalle annulaire (33) est disposé autour du coussinet (9).

3. Sèche-linge selon l'une des revendications précédentes, dans lequel le dispositif de refroidissement comprend des moyens pour améliorer le rayonnement ou la convection de la chaleur du coussinet (9) et/ou à proximité du coussinet (9) et où des surfaces de refroidissement sont prévues qui sont reliées de façon conductrice thermiquement au coussinet (9).

4. Sèche-linge selon l'une des revendications précédentes, dans lequel le dispositif de refroidissement a un dispositif pour l'acheminement d'air de refroidissement, de préférence d'air ambiant, au coussinet (9).

5. Sèche-linge selon la revendication 4, dans lequel un ventilateur (22, 37) est prévu pour acheminer l'air du processus à travers le tambour (2) et/ou pour acheminer l'air de refroidissement pour un condensateur (35), le ventilateur (22, 37) servant de dispositif pour amener l'air refroidissant au coussinet (9).

6. Sèche-linge selon la revendication 5, dans lequel une conduite d'air du processus (15) est prévue, une dépression étant appliquée à une section de la conduite d'air du processus (15) et/ou au tambour (2) par une action d'acheminement du ventilateur (22, 37), formant ainsi un espace de dépression, et une conduite d'air de refroidissement étant prévue entre l'espace de dépression et le coussinet (9), par laquelle l'air peut être aspiré sous la forme d'air ambiant contigu au coussinet (9) et être amené comme air manquant de l'air du processus.

7. Sèche-linge selon la revendication 5, dans lequel une conduite d'air du processus (15) est prévue, une surpression étant appliquée à une section de la conduite d'air du processus (15) et/ou au tambour (2) par une action d'acheminement du ventilateur (22, 37), formant ainsi un espace de surpression, et une conduite d'air de refroidissement étant prévue entre l'espace de surpression et le coussinet (9), par laquelle une partie de l'air acheminé par le ventilateur (22, 37) peut être amenée au coussinet (9) pour refroidir le coussinet (9).

8. Sèche-linge selon l'une des revendications précédentes, **caractérisé en ce qu'**une conduite d'air du processus (15) est prévue comme circuit fermé avec un condensateur (35), qui est refroidi par un courant d'air de refroidissement (36), et **en ce qu'**une partie du courant d'air de refroidissement (36) est dérivée et est amenée par une conduite d'air de refroidissement (41) au coussinet (9) pour refroidir le coussinet (9).

9. Sèche-linge selon l'une des revendications précédentes, dans lequel la quantité d'air de refroidissement est déterminée pour le coussinet (9) par la dimension de la conduite d'air de refroidissement (41).
